# EUROPÄISCHE PATENTSCHRIFT

(11) **EP 0 365 748 B1**
(45) Veröffentlichungstag und Bekanntmachung des Hinweises auf die Patenterteilung: **18.11.1993**
(21) Anmeldenummer: 89111894.5
(22) Anmeldetag: 30.06.1989
(51) Int. Cl.: C08G 75/14, C08L 81/04, C09K 3/10

(54) **Spritzgiessverfahren für flüssige merkaptoendständige Polymere**
Injection molding process for thiol-ended polymers
Procédé de moulage par injection pour des polymères à groupes thiol terminaux

(30) Priorität: 29.09.1988 DE 3833051
(43) Veröffentlichungstag der Anmeldung: 02.05.1990
(73) Patentinhaber: RÜTGERSWERKE AKTIENGESELLSCHAFT, 60326 Frankfurt (DE)
(72) Erfinder: Bergmann, Franz-Josef, Dr., D-6941 Laudenbach (DE); Hockenberger, Lothar, Dr., D-6700 Ludwigshafen/Rhein (DE); Paehler, Ralf, D-6701 Dannstadt-Schauernheim (DE)

(56) Entgegenhaltungen:
- EP-A- 0 073 530
- EP-A- 0 153 442
- EP-A- 0 194 361
- DE-A- 2 526 603
- DE-A- 2 615 963
- A.M. Wittfoht, Kunststofftechnisches Wörterbuch, Teil 3, Carl Hanser Verlag, München Wien, 1978, S. 389
- K. Stoeckhert (Hrsg.), Kunststoff-Lexikon, Carl Hanser Verlag, München Wien, 1981, S. 479-481

## Beschreibung

Die Erfindung betrifft ein Verfahren zum Spritzgießen von flüssigen merkaptoendständigen Polymeren und/oder Oligomeren sowie die dazu verwendbaren Mischungen.

Merkaptoendständige Polymere und Oligomere, insbesondere merkaptoendständige Polysulfidpolymere und -oligomere sind aufgrund ihrer großen Elastizität, ihrer ausgezeichneten Alterungs- und Chemikalienbeständigkeit und wegen ihrer guten Kälteflexibilität für viele technische Anwendungen geeignet.

So kennt man seit vielen Jahren den Einsatz von mit Ruß verstärkten festen Polysulfidkautschuken zur Herstellung von Manschetten, Abdichtungsringen oder Membranen, die in Bereichen eingesetzt werden, in denen andere Elastomere problematisch sind (vergl. High Polymers Vol. XIII, Part III, Interscience Publishers, New York-London, 1962, 155 ff). Zur Herstellung dieser Produkte wird aus dem unvernetzten Polysulfidkautschuk, Verstärker- und Zusatzstoffen sowie dem zur Härtung verwendeten Zinkoxid oder p-Chinondioxim bei höherer Temperatur ein Masterbatch hergestellt, das zu einem Fell ausgewalzt wird. Teile dieses Felles werden in die geöffnete Form einer Formpresse eingelegt und danach gepreßt und gehärtet. Ein derartiger Härtungsvorgang dauert bei der angewandten maximalen Preßtemperatur von 170 °C etwa 3 bis 4 min. Dieser Prozeß ist unwirtschaftlich, sowohl was die umständliche Herstellung der Felle angeht, als auch deren Einsatz in die Formen und die langen Preßzeiten.

Es ist daher Aufgabe der Erfindung, ein neues, eleganteres und wirtschaftliches Verfahren zur Herstellung von Kautschukartikeln aus merkaptoendständigen Polymeren und/oder Oligomeren bereitzustellen, bei dem die zu formende und zu härtende Masse pumpfähig ist und sich bei technisch vertretbarer Lagerstabilität innerhalb kurzer Zeit aushärten läßt, sodaß das Verfahren in üblichen Spritzgießmaschinen durchgeführt werden kann.

Die Lösung der Aufgabe erfolgt durch ein Verfahren gemäß der Ansprüche 1 bis 5 sowie durch Massen zur Durchführung des Verfahrens gemäß der Ansprüche 6 bis 8.

Es wurde gefunden, daß pumpfähige Massen auf Basis flüssiger, merkaptoendständiger Polymere und/oder Oligomere in Spritzgießverfahren eingesetzt und zu hochwertigen elastischen Spritzgußteilen verarbeitet werden können.

Es ist bekannt, daß flüssige, merkaptoendständige Polymere und/oder Oligomere mit Oxidationsmitteln zu elastischen Produkten gehärtet werden können. Aus EP-B 0 194 361 ist bekannt, durch Verwendung von Manganoxid als Härter und trockenen, basischen Füll- und Zusatzstoffen mit merkaptoendständigen Polymeren Mischungen herzustellen, die bei Raumtemperatur gut lagerfähig sind und die bei einer Ofentemperatur von 230 °C innerhalb von 5 min. gehärtet werden können.

Diese Härtungszeit ist für einen Spritzguß viel zu lang. Hier sind Takt- und damit Härtungszeiten von weniger als 1 min. unerläßlich. Erfindungsgemäß wird dies erreicht durch eine spezielle Rezeptierung einer Masse auf Basis flüssiger, merkaptoendständiger Polymere und/oder Oligomere. Diese Masse enthält die flüssigen merkaptoendständigen Polymere und/oder Oligomere als Bindemittel, verstärkende Füllstoffe, Zusatzstoffe, Trocken- und Beschleunigungsmittel und ein Härtungsmittel auf Basis Mangandioxid. Derartige Massen sind bei Raumtemperatur bis zu 7 d, bei 4 °C (Kühlschrank) bis zu 100 d und bei - 20 °C unbegrenzt lagerstabil. Sie sind pumpfähig und können in einer üblichen Spritzgießmaschine ohne Verfahrensänderung verarbeitet werden. Die Aushärtungszeiten liegen dabei bei 150 °C im Bereich von 15 bis 30 s. Die nach diesen Taktzeiten erhaltenden Formteile können sofort aus der Form ausgestoßen werden. Zum vollen Aufbau der Elastizität ist es allerdings ratsam, die Formteile vor der Verwendung etwa 1 d bei 70 bis 120 °C nachzutempern. Erhalten werden hochbelastbare, gummielastische Formteile mit guter Lösemittelbeständigkeit und einer Kälteflexibilität bis zu -50 °C. Diese Produkte sind daher bestens geeignet als Dichtungsringe, Manschetten oder Membranen, für jene Zonen in Maschinen oder Vorrichtungen, die mit Lösungsmitteln, Kraftstoffen oder Ölen in Berührung sind, bzw. die dagegen abgedichtet werden müssen. Insbesondere eignen sich derartige Formteile für Abdichtungen im Automobil- und Tankstellenbereich.

Für die erfindungsgemäßen, spritzgießbaren Massen sind alle flüssigen Polymere oder Oligomere oder Mischungen von oligomeren und polymeren Verbindungen mit endständigen Merkaptogruppen verwendbar, wie z. B. Polysulfidpolymere, polymere Thioäther und dgl.

Die bevorzugten flüssigen merkaptoendständigen Verbindungen sind Polysulfid-Polymere und -Oligomere der allgemeinen Formel HS-(RSS)ₙ - RSH, wobei n im Bereich von 5 bis 25 liegt und R einen Alkyl-, Alkyläther oder Alkylthioätherrest darstellt. Der bevorzugte Rest R ist ein Bis-ethyl-formal-Rest der Formel

-C₂H₄-O-CH₂-O-C₂H₄-

.

Das Molekulargewicht dieser Verbindungen liegt, abhängig von der Zahl n und der Größe des Restes R im Bereich von 500 bis 8000. Diese Polysulfid-Verbindungen haben bei Raumtemperatur eine Viskosität von 0,5 bis 80 Pa·s.

Als Mangan(IV)-oxid werden bevorzugt solche Typen eingesetzt, die als Härter für Polysulfidpolymere im Handel sind. Es handelt sich dabei meist um gamma- oder delta- Mangan(IV)-oxid, das zudem, je nach Hersteller, durch Dosierung mit Fremdionen weiter aktiviert wurde. Dieses Mangan(IV)-oxid kann bis zu 8 Gew.-% Wasser enthalten. Es ist wichtig, daß dieser Wassergehalt auf weniger als 0,1 Gew.-% reduziert wird, bevor das Mangan(IV)-oxid mit weiteren Bestandteilen der Masse vermischt wird. Die Einstellung des Wassergehaltes erfolgt bevorzugt durch die entsprechende Dosierung der Trockenmittel bei der Herstellung der Härterpaste.

Die verwendete Menge an Mangan(IV)-oxid muß so bemessen sein, daß alle Merkaptogruppen oxidativ zu Disulfidbrücken vernetzt werden können. Zweckmäßigerweise wird die 2- bis 3-fache der stöchiometrisch notwendigen Menge eingesetzt.

Als Füll- und Zusatzstoffe werden bevorzugt solche eingesetzt, die schwach sauer bis basisch sind. Als Maß für diese Acidität bzw. Alkalität dient der pH-Wert einer 10 %igen wäßrigen Lösung oder Aufschlämmung bei Füll- und festen Zusatzstoffen oder der pH-Wert einer wäßrigen Lösung oder Extraktion bei flüssigen Zusatzstoffen. Ist der pH-Wert einer derartigen Lösung oder Aufschlämmung oder eines derartigen Extraktes größer oder gleich 5, so ist der geprüfte Füll- oder Zusatzstoff einsetzbar. Einzige Ausnahme bilden die in geringen Mengen eingesetzten Verzögerer, wie z. B. Öl-, Stearin- oder Benzoesäure oder Malein- oder Phthalsäureanhydrid.

Beispiele für verstärkende Füllstoffe sind Kreiden, Dolomit, Titandioxid, Zinksulfid, Schwerspat, Quarz, Cellulose- oder Polyamidpulver, insbesondere aber Ruße. Die Mengen der eingesetzten Füllstoffe richtet sich nach der Verarbeitbarkeit der Masse und nach dem Härtegrad des herzustellenden Spritzgußteils. Im allgemeinen werden 30 bis 70 Gew.-% Füllstoffe, bezogen auf die merkaptoendständigen Polymere und/oder Oligomere verwendet. Beispiele für verwendbare feste Zusatzstoffe sind Erdalkalihydroxide, Molekularsiebpulver, Schwefelblüte, Bentonite sowie ggf. Pigmente, oder Stabilisatoren. Beispiele für flüssige Zusatzstoffe sind Weichmacher, wie z. B. Phthalate, Benzoesäureester, hydrierte Terphenyle oder hochsiedende Polyäther, Haftmittel oder flüssige Stabilisatoren, Trocknungs- oder Antiabsetzmittel.

Besondere Bedeutung kommt den einzusetzenden Trocken- und Beschleunigungsmitteln zu. Das eingesetzte Härtungssystem Mangandioxid ist bei Raumtemperatur feuchtigkeitshärtend. Die entsprechende Masse muß daher trocken sein, um eine Mindestlagerstabilität zu haben. Da anorganische Füllstoffe, viele Weichmacher sowie ebenfalls die merkaptoendständigen Polymere oder Oligomere immer Spuren von Wasser enthalten, ist der Einsatz von absolut wasserfreien Produkten unter den Bedingungen einer industriellen Fertigung nicht möglich.

Andererseits wurde gefunden, daß eine Abhängigkeit besteht zwischen dem Wassergehalt der Masse und der Härtungsgeschwindigkeit bei Spritzgießbedingungen. Es war daher der Wassergehalt der Masse hinsichtlich Lagerstabilität einerseits und Härtungszeit bei Spritzgießbedingungen zu optimieren. Er liegt bei den erfindungsgemäßen Bedingungen der Lagerstabilität bei Raumtemperatur im Bereich von 3 bis 7 d bei 0,15 bis 0,25 %.

Er wird erreicht, teils indem Einsatzstoffe verwendet werden, mit einem Wassergehalt von etwa 0,1 bis 0,3 Gew.-%, teils indem die Herstellung dieser Mischung durch Rühren unter Vakuum erfolgt.

Zudem werden der Mischung noch 1 bis 3 Gew.-%, bezogen auf die Gesamtmischung, Trockenmittel zugegeben, die mit Wasser chemisch reagieren, wie z. B. Erdalkalioxide, oder die Wasser stark absorbieren, wie z. B. Molekularsiebpulver.

Bevorzugt sind Erdalkalioxide, insbesondere Bariumoxid, da das bei der Trocknung entstehende Bariumhydroxid unter Spritzgießbedingungen wieder Wasser abspaltet und somit härtungsbeschleunigend wirkt. Entsprechendes Bariumoxid kann als Pulver eingesetzt werden oder als handelsübliche Paste (in Weichmachern).

Trotzdem liegt die erreichte Härtungszeit bei 150 °C noch über 1 min. und ist für einen wirtschaftlichen Spritzguß zu lang.

Die entscheidende Verkürzung der Härtungszeit wird durch die Zugabe eines Beschleunigers erreicht. Es wurde gefunden, daß handelsübliche Vulkanisationsbeschleuniger, von denen bekannt ist, daß sie die Härtung von Polysulfidmassen bei Raumtemperatur beschleunigen, in den erfindungsgemäßen Mischungen bei Spritzgießbedingungen, d. h., bei 140 bis 160 °C, nicht beschleunigend wirken. Überraschenderweise wird hier eine gute Beschleunigung durch Verbindungen erzielt, die eine oder mehrere sterisch gehinderte Phenolgruppen enthalten. Beispiele hierfür sind folgende Verbindungen:
Pentaerythrityl-tetrakis-(3(3,5-di-tert.butyl-4-hydroxyphenyl)-propionate),
N,N'-Hexamethylen-bis-(3,5-di-tert. butyl-4-hydroxi-hydrozimtsäureamid oder
2-(2H-Benzotriazol-2-yl)-4,6-bis(1,1-Dimethyl-ethyl)-phenol.

Insbesondere wird durch Zugabe von 0,1 bis 1,0 Gew.-%, bezogen auf die Gesamtmasse, 2,4-Bis (n-octylthio)-6-(4-hydroxy-3,5-di-tert. butylanilino)-1,3,5-triazin eine Reduzierung der Härtungszeit bei 150 °C auf 15 bis 30 s erreicht.

Die Herstellung der erfindungsgemäßen Masse erfolgt nach an sich bekannten Verfahren durch Vermischen der einzelnen Komponenten miteinander in einem für derartige Mischvorgänge üblichen Mischwerkzeug, etwa einem Planetenmischer oder einem Doppelwellendissolver, wobei die Durchmischung vorzugsweise unter Vakuum erfolgt. Einkomponentige Massen, bei denen bereits die Härterpaste eingemischt ist, werden innerhalb ihrer Verarbeitbarkeitszeit verschlossen bei Raumtemperatur oder gekühlt gelagert und danach in die Pumpanlage einer herkömmlichen Spritzgießmaschine eingebracht. Eine andere Verfahrensvariante besteht darin, die Massen als zweikomponentige Masse vorzufertigen und bei Gebrauch Masse und Härterpaste in einer dem Spritzgießgerät vorgeschalteten 2K-Mischanlage (statischer oder dynamischer Mischer) zu vermischen und dann erst der Spritzgußmaschine zuzuführen. Der Spritzguß erfolgt in an sich bekannter Weise, wobei die Temperatur im Spritzgießwerkzeug bei 140 bis 160 °C, bevorzugt bei 150 °C liegt.

### BEISPIELE

Das in Beispiel 2 verwendete Polymer ist ein Polysulfid-Polymer der durchschnittlichen Struktur

HS-(C₂H₄-O-CH₂-O-C₂H₄-SS)₂₃-C₂H₄-O-CH₂-O-C₂H₄-SH

mit etwa 2 % Quervernetzung. Es hat ein mittleres Molekulargewicht von 4000 und eine Viskosität bei 27 °C von 35 bis 45 Pa·s. Alle Mengenangaben beziehen sich auf Gewichtsteile oder Gewichtsprozente.

### Beispiel 1

### Technisches Mangan(IV)-oxid für die Härtung flüssiger Polysulfide.

In einer Kugelmühle wird eine Härtermischung aus
100 Teilen Mangan(IV)-oxid
110 Teilen Benzylbutylphthalat
5 Teilen Bariumoxidpulver
5 Teilen Molekularsiebpulver
5 Teilen Beschleuniger (2,4-Bis (n-octylthio)-6-(4-hydroxy-3,5-di-tert-butylanilino)-1,3,5-triazin)
angepastet.

### Beispiel 2

Eine Grundmischung aus
1000 Teilen Polymer
60 Teilen Benzylbutylphthalat
500 Teilen SRF-Ruß (pH 8)
10 Teilen Molekularsiebpulver
wird im Planetenmischer 30 min unter Vakuum (600 pascal) intensiv gerührt. Zu dieser Mischung werden 225 Teile der Härtermischung aus Beispiel 1 gegeben und unter Vakuum 10 min lang intensiv gemischt. Die erhaltene Masse wird in mehrere Portionen geteilt, mit denen folgende Versuche durchgeführt werden:
a. Ein Teil wird in einer Tube verschlossen bei 23 °C gelagert. Die Masse ist noch nach einer Lagerzeit von 5 d spritzbar.
b. Ein Teil wird in einer Tube verschlossen bei + 4 °C gelagert. Die Masse ist noch nach einer Lagerzeit von mehr als 30 d spritzbar.
c. Ein Teil wird über ein Pumpsystem in eine übliche Spritzgießmaschine geführt und dort zu je 2 g schweren Spritzgußteilen geformt und gehärtet. Die Temperatur der Spritzgießform beträgt 150 °C. Die Takt- und damit Härtezeit beträgt 17 s. Die ausgeworfenen Formteile sind formstabil. Nach einer Abkühlphase liegt die Shore A-Härte bei 28. Nach eintägigem Nachtempern bei 100 °C liegt die Shore A-Härte bei 49. Das Formteil zeigt eine gute Beständigkeit gegen alle üblichen Lösemittel, auch gegen Alkohol-Benzin-Gemische. Die ausgezeichnete Flexibilität ist bis zu - 50 °C gegeben.

## Patentansprüche

1. Spritzgießverfahren, **dadurch gekennzeichnet**, daß pumpfähige Massen auf Basis flüssiger, merkaptoendständiger Polymere und/oder Oligomere eingesetzt werden.

2. Verfahren nach Anspruch 1, **dadurch gekennzeichnet**, daß Massen eingesetzt werden, die trockene, flüssige, merkaptoendständige Polymere und/oder Oligomere, verstärkende Füllstoffe, Zusatzstoffe, Trocken- und Beschleunigungsmittel und ein Härtungsmittel auf Basis Mangandioxid enthalten.

3. Verfahren nach den Ansprüchen 1 und 2, **dadurch gekennzeichnet**, daß die Masse in die Form einer üblichen Spritzgießmaschine eingespritzt und dort bei 140 bis 160 °C innerhalb von 15 bis 30 s gehärtet wird.

4. Verfahren nach Anspruch 3, **dadurch gekennzeichnet**, daß die Masse bei 150 °C gehärtet ist.

5. Verfahren nach den Ansprüchen 1 bis 4, **dadurch gekennzeichnet**, daß das Spritzgußteil bei 70 bis 120 °C nachgetempert wird.

6. Spritzgießmasse, enthaltend flüssiges, merkaptoendständiges Polymer und/oder Oligomer, verstärkende Füllstoffe, Zusatzstoffe, Trockenmittel und ein Härtungsmittel auf Basis Mangandioxid und als Beschleunigungsmittel Verbindungen, die eine oder mehrere sterisch gehinderte Phenolgruppen besitzen.

7. Masse nach Anspruch 6, **dadurch gekennzeichnet**, daß sie als Trockenmittel Bariumoxid enthält.

8. Masse nach den Ansprüchen 6 und 7, **dadurch gekennzeichne**t, daß das Beschleunigungsmittel 2,4-Bis (n-octylthio)-6-(4-hydroxy-3,5-di-tert.-butylanilino)-1,3,5-triazin ist.

## Claims

1. An injection-moulding process, characterized in that pumpable materials based on liquid, mercapto-terminal polymers and/or oligomers are used.

2. A process according to claim 1, characterized in that materials are used which contain dry, liquid, mercapto-terminal polymers and/or oligomers, reinforcing fillers, additives, drying agents and accelerators and a curing agent based on manganese dioxide.

3. A process according to claims 1 and 2, characterized in that the material is injected into the mould of a conventional reaction injection-moulding machine and is cured there at 140 - 160 °C within 15 - 30 sec.

4. A process according to claim 3, characterized in that the material is cured at 150 °C.

5. A process according to claims 1 to 4, characterized in that the injection-moulded component is annealed at 70 - 120 °C.

6. An injection-moulding material containing a liquid, mercapto-terminal polymer and/or oligomer, reinforcing fillers, additives, drying agents, a curing agent based on manganese dioxide and as an accelerator compounds having one or more sterically hindered phenol groups.

7. A material according to claim 6, characterized in that it contains barium oxide as a drying agent.

8. A material according to claims 6 and 7, characterized in that the accelerator is 2,4-bis(n-octylthio)-6(4-hydroxy-3,5-di-tert.-butylanilino)-1,3,5-triazine.

## Revendications

1. Procédé de moulage par injection, caractérisé en ce qu'on met en oeuvre des masses pompables a base de polymères et/ou d'oligomères liquides à groupes thiol terminaux.

2. Procédé selon la revendication 1, caractérisé en ce qu'on met en oeuvre des masses contenant des polymères et/ou des oligomères liquides, secs, à groupes thiol terminaux, des charges renforçantes, des additifs, des produits desséchants et des accélérateurs et un durcisseur à base de dioxyde de manganèse.

3. Procédé selon les revendications 1 et 2, caractérisé en ce que la masse est injectée dans le moule d'une presse à injections par réaction classique et y est durcie à 140 - 160 °C en l'espace de 15 - 30 s.

4. Procédé selon la revendication 3, caractérisé en ce que la masse est durcie a 150 °C.

5. Procédé selon les revendications 1 à 4, caractérisé en ce que la pièce moulée par injection est soumise à un post-durcissement a 70 - 120 °C.

6. Masse pour le moulage par injection qui contient un polymère et/ou un oligomère liquide à groupes thiol terminaux, des charges renforçantes, des additifs, des produits desséchants, un durcisseur à base de dioxyde de manganèse et en tant qu'accélérateurs des composés comportant un ou plusieurs groupes phénoliques encombrés.

7. Masse selon la revendication 6, caracérisée en ce qu'elle contient de l'oxyde de baryum en tant que produit desséchant.

8. Masse selon les revendications 6 et 7, caractérisée en ce que l'accélérateur est la 2,4-bis (n-octylthio)-6-(4-hydroxy-3,5-di-tert.-butylanilino)-1,3,5-triazine.
